# EUROPEAN PATENT APPLICATION

(11) **EP 1 950 483 A1**
(43) Date of publication of application: **30.07.2008**
(21) Application number: 06822560.6
(22) Date of filing: 30.10.2006
(51) Int. Cl.: F16L 37/14, F02M 37/00

(54) **CONNECTOR FOR CIRCULATION, CONNECTION STRUCTURE FOR CONNECTOR FOR CIRCULATION, AND FUEL CIRCULATION SYSTEM**

(30) Priority: 11.11.2005 JP 2005327307
(71) Applicant: Bosch Corporation, Shibuya-ku Tokyo 150-8360 (JP)
(72) Inventor: TAJIKA, Yoshio, Higashimatsuyama-shi, Saitama 355-0028 (JP); UCHIDA, Akira, Higashimatsuyama-shi, Saitama 355-0028 (JP)
(74) Representative: Knapp, Thomas
(86) International application number: PCT/JP2006/321603
(87) International publication number: WO 2007/055118

(57) **Abstract**

A circulation connector that can be inserted into a fuel injection portion with a relatively weak force, a connection structure of the circulation connector, and a fuel circulation system are provided.

A circulation connector is used in a fuel circulation system in an internal combustion provided with a fuel injection portion to flow a fuel back to a fuel tank from the fuel injection portion and interposed between the fuel injection portion and a fuel circulation hose while being joined to the fuel injection portion. The circulation connector includes a second groove portion locked while being inserted in a coupling portion of the fuel injection portion by a clip member together with a first groove portion provided to the coupling portion, and a tapered portion whose diameter becomes smaller from the second groove portion in an insertion direction. An angle of inclination of the tapered portion with respect to the insertion direction on a side closer to the second groove portion is made smaller than an angle of inclination with respect to the insertion direction on a side apart from the second groove portion.

## Description

### Technical Field

The present invention relates generally to a circulation connector, a connection structure of the circulation connector, and a fuel circulation system. The invention relates more particularly to a circulation connector that can be readily inserted into a fuel injection portion of the internal combustion, a connection structure of the circulation connector, and a fuel circulation system using such a circulation connector.

### Background Art

In the related art, a fuel injector used in a common rail system in the internal combustion injects fuel to the internal combustion by introducing a high-pressure fuel pressure-fed from the common rail inside the fuel injector and then by opening and closing the injection hole made at the tip portion with the use of a valve body.
A pressure-fed high-pressure fuel first flows into a pressure control chamber in the fuel injector. Part of the fuel is then released to control the valve body for opening the injection hole, from which the fuel is injected. It is configured in such a manner that the excessive fuel released in this instance and the fuel used as a lubricant are flown back to the fuel tank via a fuel circulation hose.

In the fuel circulation system configured as above, a passage for flowing back the fuel is defined by connecting the fuel injector and the fuel circulation hose via a circulation connector that is joined and fixed to the fuel injector. In a case where the circulation connector and the fuel injector or the fuel circulation hose are connected insufficiently, these members are disconnected by vibrations of the internal combustion or the like, and there is a risk of fuel leakage. Because such fuel leakage can cause an engine fire, it is necessary to secure the connection reliability of these members.

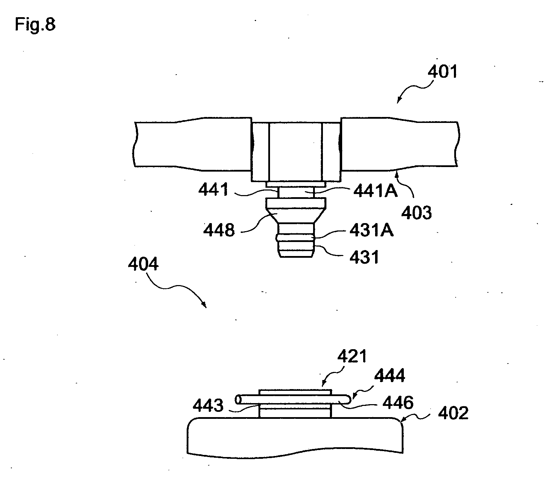

With the aim of preventing the circulation connector from falling off from the fuel injector, there has been proposed an element coupling device that uses a bracket with a large spring force for fixing the circulation connector to the fuel injector on one hand and lessens an insertion load generated when the circulation connector is pushed into the fuel injector on the other hand.
To be more concrete, as is shown in FIG. 8, an element coupling device 404 is configured in such a manner that a pair of holding openings 443 is provided to the peripheral wall of a port member 421 for a pair of leg portions 446 of a U-shaped clip member 444 to be inserted therein, so that when a connector member 431 is pushed into the port member 421, the required element coupling is achieved as the leg portions 446 are pushed apart temporarily to allow the projections of the leg portions 446 to be locked in a holding groove 441. In this element coupling device 404, the clip member 444 is attached to the port member 421 in such a manner that a line linking the centers of the circular arcs forming the respective curved surfaces of the projections is shifted by a predetermined length from the center of the diameter of the circumferential surface 441A of the holding groove 441 (see Patent Document 1).
Patent Document 1: JP-A-2003-329184 (FIG. 2)

### Disclosure of the Invention

### Problems that the Invention is to Solve

The element coupling device disclosed in Patent Document 1 supra, however, has a connection structure in which the connector member is inserted into the port member while the clip member is being pushed apart. Accordingly, while the connector member is pushed in further, a spring force of the clip member increases gradually, and so does the insertion resistance. More specifically, a spring force increases gradually while the clip member is pushed apart gradually by the tapered portion of the connector member. Accordingly, a large force is required in order to fully push the connector member into the port member. This structure therefore deteriorates the workability and may possibly apply a load on the fingertips.

The inventors of the invention conducted assiduous studies and completed the invention when they discovered that the problems discussed above can be solved by forming the tapered portion of the circulation connector into a specific shape.
In other words, an object of the invention is to provide a circulation connector that can be inserted readily and efficiently into the fuel injector, a connection structure of the circulation connector, and a fuel circulation system using such a circulation connector.

### Means for Solving the Problems

According to one aspect of the invention, a circulation connector is provided, which is used in a fuel circulation system in an internal combustion provided with a fuel injection portion to flow a fuel back to a fuel tank from the fuel injection portion and interposed between the fuel injection portion and a fuel circulation hose while being joined to the fuel injection portion. The circulation connector is characterized in that: it includes a second groove portion locked while being inserted in a coupling portion of the fuel injection portion by a clip member together with a first groove portion provided to the coupling portion and a tapered portion whose diameter becomes smaller from the second groove portion in an insertion direction, and that an angle of inclination of the tapered portion with respect to the insertion direction on a side closer to the second groove portion is made smaller than an angle of inclination with respect to the insertion direction on a side apart from the second groove portion. Accordingly, the problems discussed above can be solved.

It is preferable to configure the circulation connector of the invention in such a manner that the tapered portion has the angle of inclination that is varied step-wise.

Also, it is preferable to configure the circulation connector of the invention in such a manner that a cross section of the tapered portion cut in a plane along the insertion direction is shaped in a curve.

Also, it is preferable to configure the circulation connector of the invention in such a manner that a cross section of the tapered portion cut in a plane along the insertion direction is shaped so that a curved portion and a linear portion are continuous with each other.

Also, it is preferable to configure the circulation connector of the invention in such a manner that the second groove portion and the tapered portion are continuous with each other.

Also, it is preferable to configure the circulation connector of the invention in such a manner that the angle of inclination on the side closer to the second groove portion is set to a value in a range of 1 to 20°.

Another aspect of the invention is a connection structure of a circulation connector provided to a fuel circulation system in an internal combustion provided with a fuel injection portion to flow a fuel back to a fuel tank from the fuel injection portion and used to join the circulation connector to the fuel injection portion. The structure of a circulation connector is characterized in that: the fuel injection portion includes a coupling portion to which the circulation connector is to be coupled, and the coupling portion has a first groove portion; the circulation connector has a second groove portion locked while being inserted into the coupling portion by a clip member together with first groove portion of the fuel injection portion, and a tapered portion whose diameter becomes smaller from the second groove portion in an insertion direction; and an angle of inclination of the tapered portion with respect to the insertion direction on a side closer to the second groove portion is made smaller than an angle of inclination with respect to the insertion direction on a side apart from the second groove portion.

Still another aspect of the invention is a fuel circulation system in an internal combustion provided with a fuel injection portion to flow a fuel back to a fuel tank from the fuel injection portion. The fuel circulation system is characterized in that: it includes a connection structure of a circulation connector interposed between the fuel injection portion and a fuel circulation hose and used to join the circulation connector that is to be joined to the fuel injection portion; the fuel injection portion includes a coupling portion to which the circulation connector is to be coupled, and the coupling portion has a first groove portion; the circulation connector includes a second groove portion locked while being inserted in the coupling portion of the fuel injection portion by a clip member together with the first groove portion provided to the coupling portion, and a tapered portion whose diameter becomes smaller from the second groove portion in an insertion direction; and an angle of inclination of the tapered portion with respect to the insertion direction on a side closer to the second groove portion is made smaller than an angle of inclination with respect to the insertion direction on a side apart from the second groove portion.

### Effect of the Invention

According to the circulation connector, the connection structure of the circulation connector, and the fuel circulation system using the circulation connector of the invention, by providing the circulation connector with the tapered portion of a specific shape, it is possible to insert the circulation connector into the fuel injection portion readily and efficiently while pushing the clip member apart with a relatively weak force. Hence, not only can the workability be enhanced, but also a load applied on the fingertips can be reduced.
In addition, by providing the tapered portion in which the angle of inclination is varied depending on the region in the tapered portion, it is possible to eliminate the need to change the lengths of the coupling portion of the fuel injection portion and the circulation connector as was necessary in a case where the angle of inclination is merely changed. It is thus possible to facilitate the insertion of the circulation connector using a relatively simple configuration.

### Brief Description of the Drawings

FIG. 1 is a view showing an example of the configuration of a fuel circulation system of the invention.
FIG. 2 is a view used to describe the connection structure of a circulation connector of the invention.
FIG. 3 is a view showing an example of the configuration of a circulation connector having a tapered portion whose angle of inclination is varied step-wise.
FIG. 4 is a view showing an example of the configuration of a circulation connector having a curved tapered portion.
FIG. 5 is a view showing an example of the configuration of a circulation connector having a tapered portion in which a curved portion and a linear portion are continuous with each other.
FIG. 6 is a view showing a circulation connector in which a second groove portion and the tapered portion are continuous with each other.
FIG. 7 is a view showing a relation of a stroke amount of the circulation connector and a pressing force.
FIG. 8 is a view showing the configuration of the connection structure of the circulation connector in the related art.

### Best Mode for Carrying Out the Invention

Hereinafter, embodiments of a circulation connector, a connection structure of the circulation connector, and a fuel circulation system of the invention will be described in detail. It should be appreciated, however, that embodiments below are mere examples of the invention and are not intended to limit the invention, and the invention can be modified arbitrarily within the scope of the invention.

One embodiment of the invention is a connection structure of a circulation connector in a fuel circulation system in the internal combustion provided with a fuel injection portion to flow a fuel back to a fuel tank from the fuel injection portion and used to join a circulation connector (hereinafter, occasionally also referred to simply as the connector) to the fuel injection portion.
In the connection structure of the circulation connector, the fuel injection portion includes a coupling portion to which the circulation connector is to be coupled. The coupling portion has a first groove portion. The circulation connector has a second groove portion that is locked by a clip member together with the first groove portion of the fuel injection portion, and a tapered portion whose diameter becomes smaller from the second groove portion in the insertion direction. It is characterized in that an angle of inclination of the tapered portion with respect to the insertion direction on the side closer to the second groove portion is made smaller than an angle of inclination with respect to the insertion direction on the side apart from the second groove portion.

### 1. Internal Combustion

A diesel engine and a gasoline engine are typical internal combustions. Herein, a suitable object is a diesel engine equipped with a common rail system that enables control on injection timing, an injection amount, and a pressure of fuel with accuracy and requiring a higher pressure fuel.

### 2. Fuel Circulation System

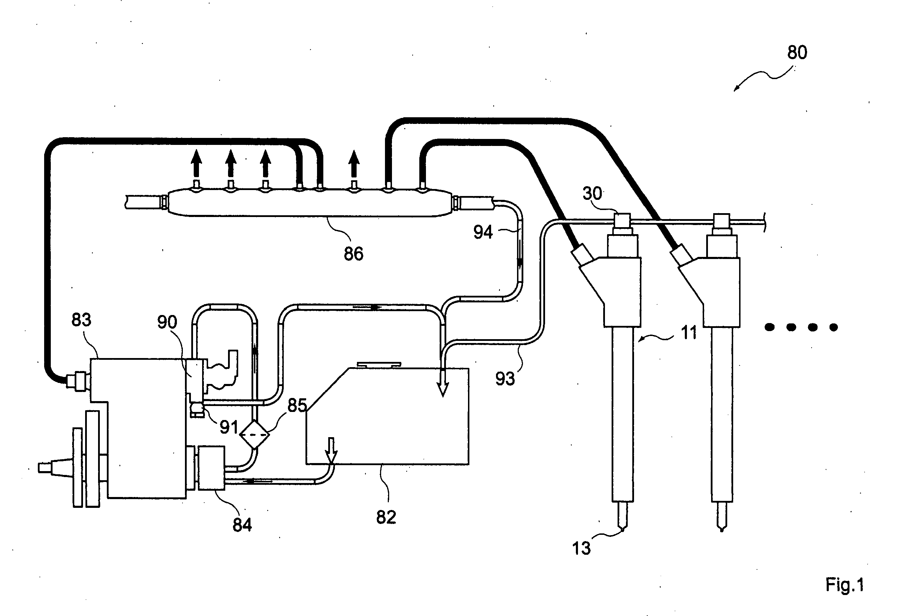

FIG. 1 shows an example of a fuel circulation system of the internal combustion using the connection structure of a circulation connector of this embodiment.
As is shown in FIG. 1 by way of example, a fuel circulation system 80 is configured to include a fuel tank 82, a feed pump (low pressure pump) 84 to feed a fuel in the fuel tank 82, a fuel supply pump (high pressure pump) 83, a common rail 86 as an pressure accumulator to accumulate a fuel pressure-fed from the fuel supply pump 83, and plural fuel injection portions (injectors) 11 that inject the fuel pressure-fed from the common rail 86 to the inside of the cylinders of the internal combustion.

The feed pump 84 is a portion that pressure-feeds a fuel (diesel oil) within the fuel tank 82 to the fuel supply pump 83, and it is preferable that a filter 85 is interposed between the feed pump 84 and the fuel supply pump 83. Although it is a mere example, the feed pump 84 has a gear pump structure and is attached to the end portion of the cam, so that it is driven by the driving of the gear through direct coupling to the cam shaft or a suitable gear ratio.

The fuel pressure-fed from the feed pump 84 via the filter 85 is supplied to the fuel supply pump 83 by way of a proportional control valve 90 that adjusts an injection amount.
Further, it is configured in such a manner that the fuel supplied from the feed pump 84 is flown back to the fuel tank 82 via an overflow valve (OFV) 91 provided in parallel with the proportional control valve 90 besides being pressure-fed to the proportional control valve 90 and the fuel supply pump 83. Part of the fuel is pressure-fed to a cam chamber (not shown) in the fuel supply pump 8.3 via an orifice (not shown) attached to the overflow valve and used as a fuel lubricant in the cam chamber.

The common rail 86 is a portion that first stores the fuel supplied from the fuel supply pump to bring the fuel in a high pressure state, and then pressure-feeds the fuel to the respective injectors 11 at a homogeneous pressure. The structure of the common rail 86 is not particularly limited, and any known structure is available.
In a case where, for example, the internal pressure of the common rail 86 is to be reduced for adjusting the internal pressure of the common rail 86, part of the fuel is flown back to the fuel tank 82 via a fuel circulation hose 94 by a pressure adjusting valve (not shown).

In addition, the plural injectors 11 are connected to the common rail 86. The fuel accumulated under a high pressure in the common rail 86 is pressure-fed to the respective injectors 11 and flows into the pressure control chamber (not shown) in each injector 11. The valve body is pushed in a direction to close the injection hole 13 by the high-pressure fuel flowing into the pressure control chamber. By weakening the pushing force to the valve body by releasing part of the high-pressure fuel within the pressure control chamber, it is possible to inject the fuel to the inside of the cylinders of the internal combustion from the injection hole 13.
Accordingly, the fuel can be injected into the internal combustion via the injectors 11 at an injection pressure that matches the rotational frequency while the injection pressure remains unsusceptible to a variance of the rotational frequency of the engine.
In this instance, part of the fuel released from the pressure control chamber in order to open the injection hole 13 is flown back to the fuel tank 82 via the circulation connector 30 connected to the injector 11 and a fuel circulation hose 93 connected to the circulation connector 30.

### 3. Connection Structure of Circulation Connector

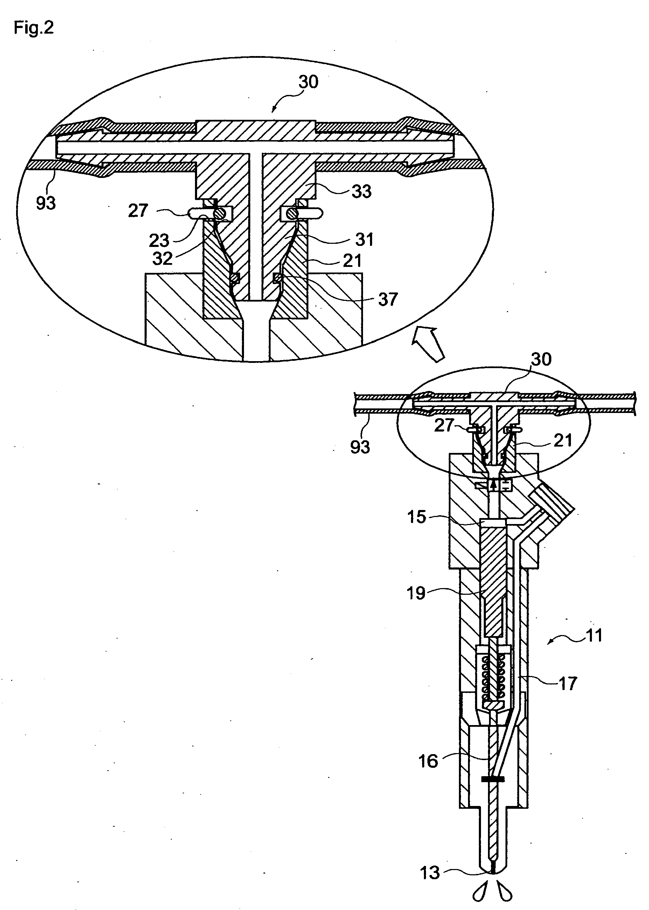

The circulation connector of the invention and the connection structure thereof will now be described with reference to FIG. 2.
As an example of the fuel injection portion employed in the connection structure of the circulation connector of this embodiment, the injector 11 as shown in FIG. 2 can be used. This injector includes a pressure control chamber 15, a nozzle piston 19, a valve body 16, a fuel passage 17, and an injection hole 13. The high-pressure fuel pressure-fed from the common rail or the like and flowing into the pressure control chamber 15 forces the nozzle piston 19 to push the valve body 16 in a direction to close the injection hole 13. When the fuel is injected, the pushing force of the nozzle piston 19 is weakened by releasing part of the fuel within the pressure control chamber 15 to allow the valve body 16 to move for opening the injection hole 13. Accordingly, the fuel can be injected to the inside of the combustion chamber of the internal combustion.

In addition, the injector 11 shown in FIG. 2 includes a circular cylindrical coupling portion 21 to which the connector 30 is to be joined at an end position on the side opposite to the injection hole 13. The connector 30 includes an insertion portion 31 to be inserted into the coupling portion 21 of the injector 11 and a head portion 33 continuous with the insertion portion 31. The coupling portion 21 of the injector 11 and the insertion portion 31 of the connector 30 are coupled coaxially to each other. Part of the fuel released to open the injection holes 13 at the injection and the fuel used as the lubricant flow into the fuel circulation hose 93 via the connectors 30 and are flown back to the fuel tank.
To be more concrete, the coupling portion 21 of the injector 11 has a first groove portion 23, and the insertion portion 31 of the connector 30 has a second groove portion 32. By inserting the insertion portion 31 of the connector 30 into the coupling portion 21 of the injector 11, and by pressing down both the first groove portion 23 and the second groove portion 32 simultaneously with a clip member 27, it is possible to fix the injector 11 and the connector 30 to each other so as not to readily fall off.
The insertion portion 31 of the connector 30 to be inserted into the coupling portion 21 of the injector 11 has an O-ring 37. By sealing a space between the inner peripheral surface of the coupling portion 21 of the injector 11 and the insertion portion 31, it is possible to prevent the fuel from leaking to the outside.

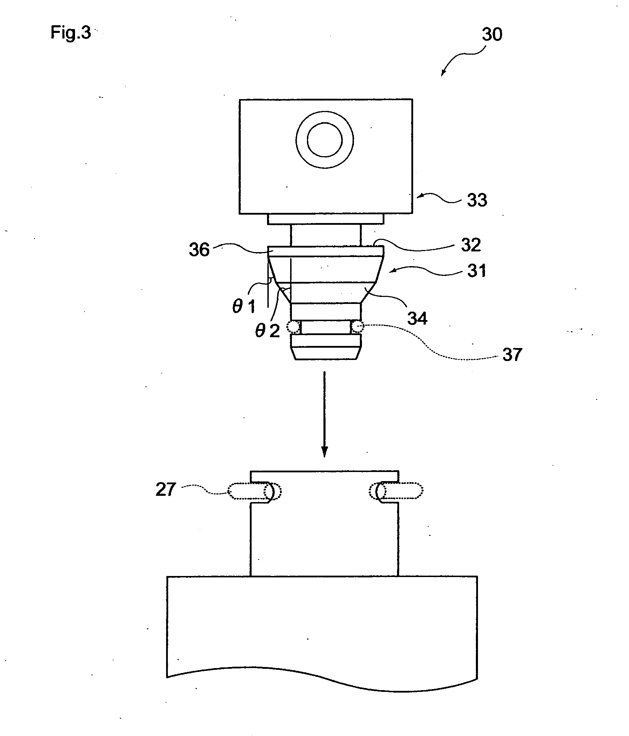

As is shown in FIG. 3, the insertion portion 31 of the circulation connector 30 used in this embodiment has a tapered portion 34 whose diameter becomes smaller from the second groove portion 32 in the insertion direction. The tapered portion 34 is characterized in that an angle of inclination, θ1, with respect to the insertion direction on the side closer to the second groove portion 32 is made smaller than an angle of inclination, θ2, on the side apart from the second groove portion 32. In other words, without requiring an excessive load and with a relatively weak force, the connector 30 can be inserted swiftly and efficiently into the injector with which the clip member 27 is locked in the first groove portion 23. By configuring in such a manner that the angle of inclination varies depending on the region in the tapered portion, the need to change the length of the tapered portion can be eliminated. Accordingly, it is not necessary to significantly change the design of the injectors and the connectors used in the related art.

To be more concrete, in the case of the connector in the related art having the tapered portion tapered at an invariable angle of inclination, the clip member is pushed apart wider gradually as the connector is inserted into the coupling portion of the injector, which increases a spring force. Accordingly, in order to lock the clip member in the second groove portion, a relatively large force is required. Hence, not only the workability is reduced, but also a load is applied on the fingertips or the like.
On the contrary, in the circulation connector and the connection structure of the circulation connector of the invention, by forming the tapered portion of the connector into a specific shape, the clip member will not be pushed apart wide at the initial phase when inserting the connector into the coupling portion of the injector. Accordingly, the connecter can be inserted into the coupling portion with a relatively small force. Also, because the angle of inclination with respect to the insertion direction is smaller in a state where the clip member is pushed apart wide, the connector can be inserted into the coupling portion with a relatively small force, too.

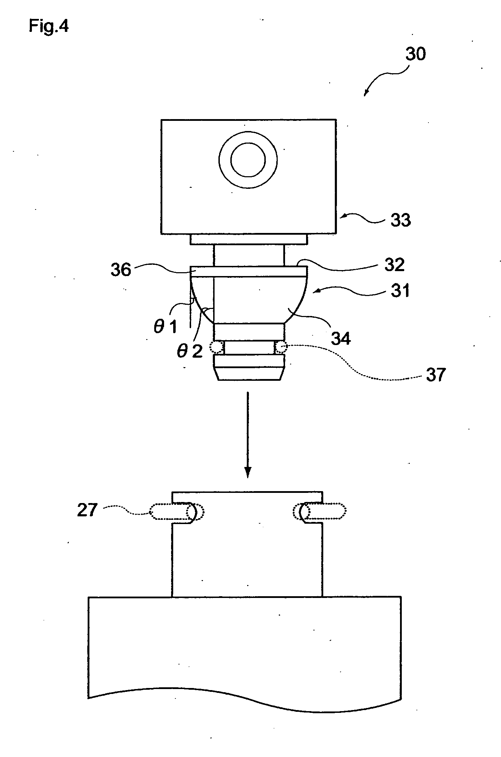

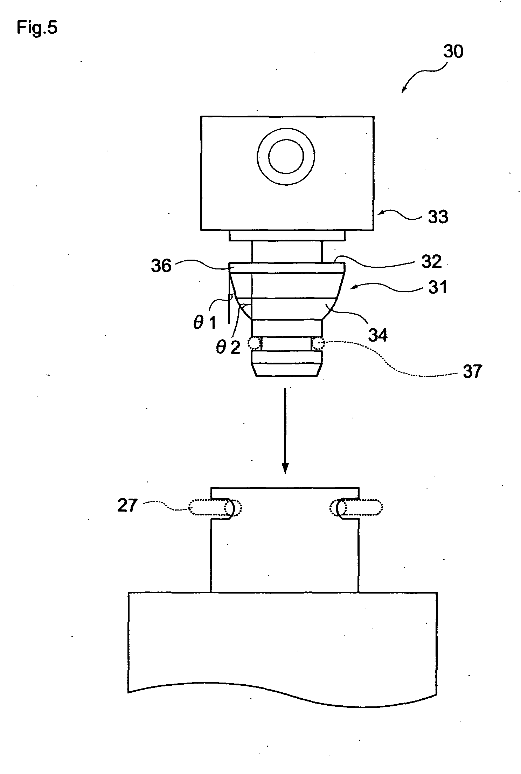

Examples of such a tapered portion of the connector can be the structures as shown in FIG. 3 through FIG. 5. FIG. 3 shows an example when the tapered portion 34 is formed in a 2-step tapered shape in which the angle is changed in two steps. FIG. 4 shows an example when the cross section of the tapered portion 34 cut in a plane along the insertion direction is shaped in a curve. FIG. 5 shows an example when the cross section of the tapered portion 34 cut in a plane along the insertion direction is shaped so that a curved portion and a linear portion are continuous with each other.
By providing the tapered portion 34 of any of these shapes shown by way of example, when the connector 30 is inserted into the coupling portion 21 of the injector 11, it is possible to insert the clip member readily without requiring an excessive load against a spring force of the clip member 27 at the initial phase of the insertion.

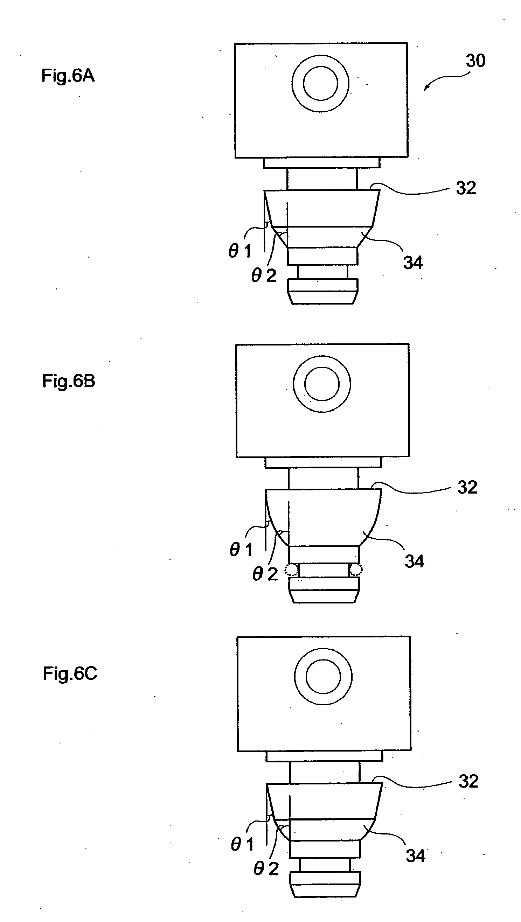

In a case where these tapered portions are provided, as are shown in.FIGs. 6A through 6C, it is preferable that the second groove portion 32 and the tapered portion 34 are continuous with each other.
The reason why is as follows. That is, in comparison with cases where a flat portion 36 is present between the second groove portion 32 and the tapered portion 34 as are shown in FIG. 3 through FIG. 5, the angle of inclination, θ1, of the tapered portion 34 on the side closer to the second groove portion can be made smaller by making the length of the tapered portion 34 longer without the need to change the overall length of the connector 30.

Also, when these tapered portions are provided, it is preferable to set the angle of inclination, θ1, on the side closer to the second groove portion 32 to a range of 1 to 20°.
The reason why is as follows. That is, when the connector 30 is inserted into the injector 11 by pushing apart the clip member 27, the spring force of the clip member 27 increases with an increase of the insertion amount. However, the resistance induced by the spring force can be eased within this range.
In a case where the tapered portion is a step-like inclined portion, it is preferable that the angle is set to a range of 10 to 20°. The reason why is as follows. That is, in a case where the angle of inclination is varied step-wise, when the angle of inclination is excessively small, the overall length of the tapered portion becomes longer. In such a case, a limitation may be imposed on the configuration of the connection structure of the connector.

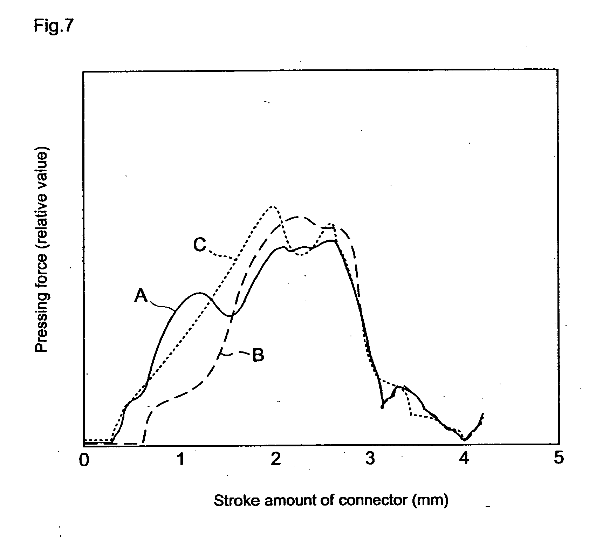

A relation between a push-in amount (stroke amount) and a pressing force when the connector is inserted into the coupling portion of the injector will now be described with reference to Table 1 below and FIG. 7.
Referring to Table 1 below and FIG. 7, the connector A is an example of the connector (θ1=17.5° < θ2=30°) of the invention having a tapered portion, which is a 2-step tapered portion shown in FIG. 3 and whose angle of inclination, θ1, on the side closer to the second groove portion is 17.5° and whose angle of inclination, θ2, on the side apart from the second groove portion is 30°. The connector B is an example of a connector (θ1=θ2=20°) having a tapered portion whose angle of inclination is invariable, which is a tapered portion having the second groove portion and the tapered portion that are continuous with each other and an angle of inclination of 20°. Further, the connector C is an example of a connector (θ1=θ2=30°) having a tapered portion whose angle of inclination is also invariable, which is a tapered portion having the second groove portion and the tapered portion that are not continuous with each other and an angle of inclination of 30°.

Referring to Table 1 below first, Case 1 shows peak values of a pressing force in a case where the respective connectors are inserted into the coupling portion of the injector when diesel oil as the lubricant is applied on the connector side alone. Case 2 shows the peak values when diesel oil as the lubricant is applied both on the connector side and the coupling portion side. Case 3 shows the peak values when oil with a more excellent lubrication property is applied both one the connector side and the coupling portion side. The respective peak values of the pressing force set forth in Table 1 below are relative values with respect to.1, which is given as the peak value of the pressing force of the connector A (θ1<θ2) in Case 1.
As set forth in Table 1 below, in Case 1 where diesel oil is applied on the connector side alone, the peak value of the pressing force of the connector B (θ1=θ2) is the lowest, whereas in Case 2 and Case 3 where the lubricant is applied both on the connector side and the coupling portion side, the peak value of the pressing force of the connector A (θ1<θ2) of the invention becomes noticeably low.

**[Table 1]**

| | Connector A (θ1<θ2) | Connector B (θ1=θ2) | Connector C (θ1=θ2) |
|---|---|---|---|
| Case 1 Connector alone: Diesel Oil | 1.00 | 0.89 | 1.15 |
| Case 2 Connector + Coupling Portion: Diesel Oil | 0.77 | 1.22 | 1.14 |
| Case 3 Connector + Coupling Portion: Oil | 0.46 | 0.65 | 0.80 |

FIG. 7 shows a relation of a stroke amount and a pressing force in a case where the connector is inserted into the coupling portion while the lubricant is applied both on the connector and the coupling portion. In FIG. 7, the abscissa is used for a stroke amount (mm) of the connector inserted inside the coupling portion of the injector, and the ordinate is used for the pressing force (relative value). In the drawing, a solid line A shows a variance in pressure in a case where the connector A (θ1<θ2) of the invention is inserted. A broken line B shows a variance in pressure in a case where the connector B (θ1=θ2) described above is inserted. Further, a dotted line C shows a variance in pressure in a case where the connector C (θ1=θ2) is inserted.
As is shown in FIG. 7, in comparison with the connector B (θ1=θ2) and the connector C (θ1=θ2) having the tapered portion whose angle of inclination is invariable, the pressing force becomes slightly larger at the initial phase of the insertion in the connector A (θ1<θ2). Nevertheless, the peak of the pressing force in a state where the clip member is pushed apart is suppressed small.
It is therefore understood from Table 1 above and FIG. 7 that by making the angle of inclination of the tapered portion of the connector on the side closer to the second groove smaller, the connector can be inserted into the coupling portion of the injector with a relatively weak force without the need to change the lengths of the coupling portion and the connector.

As has been described, by making the tapered portion of the circulation connector to be inserted into the fuel injection portion into a specific shape, it becomes possible to insert the connector into the coupling portion with a relatively weak force without the need to change the lengths of the coupling portion of the fuel injection portion and the circulation connector. Hence, not only can the workability be enhanced, but also a load applied on the fingertips or the like can be lessened.

## Claims

1. A circulation connector used in a fuel circulation system in an internal combustion provided with a fuel injection portion to flow a fuel back to a fuel tank from the.fuel injection portion and interposed between the fuel injection portion and a fuel circulation hose while being joined to the fuel injection portion, **characterized by** comprising:
a second groove portion locked while being inserted in a coupling portion of the fuel injection portion by a clip member together with a first groove portion provided to the coupling portion; and
a tapered portion whose diameter becomes smaller from the second groove portion in an insertion direction,
wherein an angle of inclination of the tapered portion with respect to the insertion direction on a side closer to the second groove portion is made smaller than an angle of inclination with respect to the insertion direction on a side apart from the second groove portion.

2. The circulation connector according to claim 1, wherein:
the tapered portion has the angle of inclination that is varied step-wise.

3. The circulation connector according to claim 1, wherein:
a cross section of the tapered portion cut in a plane along the insertion direction is shaped in a curve.

4. The circulation connector according to claim 1,
wherein:
a cross section of the tapered portion cut in a plane along the insertion direction is shaped so that a curved portion and a linear portion are continuous with each other.

5. The circulation connector according to any of claims 1 through 4, wherein:
the second groove portion and the tapered portion are continuous with each other.

6. The circulation connector according to any of claims 1 through 5, wherein:
the angle of inclination on the side closer to the second groove portion is set to a value in a range of 1 to 20°.

7. A structure of a circulation connector provided to a fuel circulation system in an internal combustion provided with a fuel injection portion to flow a fuel back to a fuel tank from the fuel injection portion and used to join the circulation connector to the fuel injection portion,
**characterized in that**:
the fuel injection portion includes a coupling portion to which the circulation connector is to be coupled, and the coupling portion has a first groove portion;
the circulation connector has a second groove portion locked while being inserted into the coupling portion by a clip member together with first groove portion of the fuel injection portion, and a tapered portion whose diameter becomes smaller from the second groove portion in an insertion direction; and an angle of inclination of the tapered portion with respect to the insertion direction on a side closer to the second groove portion is made smaller than an angle of inclination with respect to the insertion direction on a side apart from the second groove portion.

8. A fuel circulation system in an internal combustion provided with a fuel injection portion to flow a fuel back to a fuel tank from the fuel injection portion, **characterized in that**:
the fuel circulation system comprises a connection structure of a circulation connector interposed between the fuel injection portion and a fuel'circulation hose and used to join the circulation connector that is to be joined to the fuel injection portion;
the fuel injection portion includes a coupling portion to which the circulation connector is to be coupled, and the coupling portion has a first groove portion;
the circulation connector includes a second groove portion locked while being inserted in the coupling portion of the fuel injection portion by a clip member together with the first groove portion provided to the coupling portion, and a tapered portion whose diameter becomes smaller from the second groove portion in an insertion direction; and
an angle of inclination of the tapered portion with respect to the insertion direction on a side closer to the second groove portion is made smaller than an angle of inclination with respect to the insertion direction on a side apart from the second groove portion.
